## Europäisches Patentamt
## European Patent Office
## Office européen des brevets

(19)

(11) Publication number: **0 049 572**
**B1**

(12)

# EUROPEAN PATENT SPECIFICATION

(45) Date of publication of patent specification: **01.08.84**

(51) Int. Cl.³: **A 62 B 35/02, B 60 R 21/10**

(21) Application number: **81304136.5**

(22) Date of filing: **09.09.81**

(54) Seatbelt anchor device.

(30) Priority: **08.10.80 JP 140897/80**

(43) Date of publication of application:
**14.04.82 Bulletin 82/15**

(45) Publication of the grant of the patent:
**01.08.84 Bulletin 84/31**

(84) Designated Contracting States:
**DE FR GB**

(56) References cited:
**DE - A - 2 412 253**
**DE - A - 2 530 977**
**DE - A - 2 625 572**
**DE - A - 2 657 819**
**DE - B - 2 303 222**
**DE - U - 7 302 459**
**DE - U - 7 821 970**
**GB - A - 1 486 974**
**GB - A - 1 497 397**
**GB - A - 2 018 574**
**US - A - 4 056 282**

(73) Proprietor: **TOYOTA JIDOSHA KABUSHIKI KAISHA**
**1, Toyota-cho Toyota-shi**
**Aichi-ken 471 (JP)**

(72) Inventor: **Ogawa, Hisashi**
**1-92, Aza-Nagane Hosokawacho**
**Okazaki Aichi (JP)**

(74) Representative: **Burnside, Michael et al,**
**c/o Michael Burnside & Partners 2 Serjeants' Inn**
**Fleet Street**
**London EC4Y 1HL (GB)**

Courier Press, Leamington Spa, England.

## Description

This invention relates to a seatbelt anchor device used in a seatbelt system for protecting an occupant in an emergency of a vehicle, and more particularly to a seatbelt anchor device for supporting a webbing for restraining the occupant.

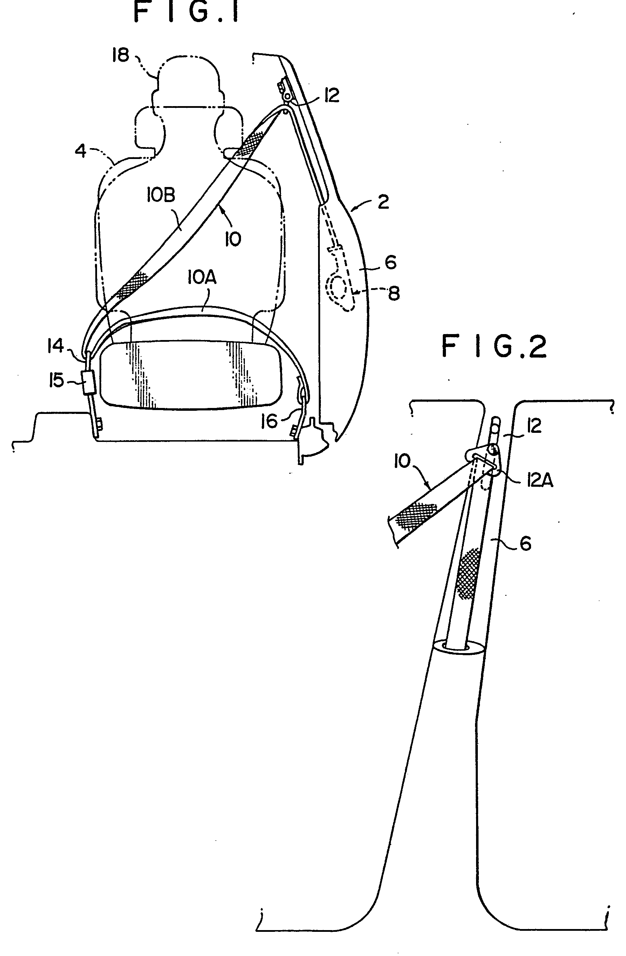

As shown in Fig. 1, for example, in a seatbelt device provided adjacent a seat 4 in a motor vehicle 2, a webbing 10 extends from a retractor 8 disposed substantially at the center of a center pillar 6 of a vehicle body. The webbing 10 turns around at a shoulder anchor 12 disposed at the upper portion of the center pillar 6, then turns around at a through-tongue 14 engaged with a buckle 15 disposed at the central portion of the vehicle, and thereafter, engages at one end thereof with a lap anchor 16 disposed at the lower portion of the center pillar 6, whereby a portion of the webbing 10 between the through-tongue 14 and the lap anchor 16 as a lap webbing 10A is closely placed over the lap of an occupant 18 and a portion of the webbing 10 between the through-tongue 14 and the shoulder anchor 12 as a shoulder webbing 10B is closely placed over the chest of the occupant.

With the conventional seatbelt system as described above, the shoulder anchor 12 disposed at the upper portion of the center pillar 6 is of such an arrangement that a through-ring 12A is rotatably secured to the center pillar 6 as shown in Fig. 2. However, there has not been provided any means for adjusting the vertical position of the through-ring 12A, whereby the shoulder webbing has not been placed over the occupant with the same placement due to the difference in physical build between the occupants 18, thus unabling to satisfactorily display the occupant restraining performance in an emergency of the vehicle.

In consequence, there has been proposed such a shoulder anchor being of such an arrangement that two or more shoulder anchor securing positions are provided on the center pillar 6 in the longitudinal direction thereof and the optional shoulder anchor securing position can be selected in accordance with the physical build of the occupant. However, it has been extremely troublesome to secure the shoulder anchor to a proper securing position.

DE—A—2,625,572 decribes a seatbelt anchor device having the features set out in the preamble of Claims 1 and 9. DE—A—2,530,977 describes an adjustable seatbelt anchor device which utilizes a releasable catch member movably mounted on a slidable anchor plate which carries a webbing support member.

The present invention has as its object the provision of a seatbelt anchor device for adjustably positioning the webbing support member, and having an improved construction for the releasable locking means.

In one aspect, the invention starts from a seatbelt anchor device having the features set out in the preamble of Claim 1 and is characterised in that said plurality of holes are located in a side portion of said retainer, in that said hook member is rotatably supported by said anchor plate and in that said release means is a separate release lever, which is pivotally mounted on said anchor plate and is coupled with said hook member.

In another aspect, the invention starts from a seatbelt anchor device having the features set out in the preamble of Claim 9 and is characterised in that said plurality of holes are located in a side portion of said retainer, in that said hook member is movably supported by said anchor plate and has a projection engageable in any selected one of said holes, in that said release means is a separate release lever, which is movably mounted on said anchor plate and acts on said hook member to move the hook member in response to movement of the release lever, and in that said biassing means acts between said anchor plate and said release lever to bias the release lever, and in turn the hook member, in a direction to engage said projection of the hook member in any one of said holes.

In the drawings:—

Fig. 1 is a front view showing an example of the conventional seatbelt system;

Fig. 2 is a view showing the appearance of an example of the conventional shoulder anchor device;

Fig. 3 is a sectional view showing an embodiment of the seatbelt anchor device according to the present invention;

Fig. 4 is a view showing an appearance of the retainer provided on the seatbelt anchor device described above;

Fig. 5 is a disassembled perspective view showing the mechanism disposed in the anchor plate provided in the seatbelt anchor device described above;

Fig. 6 is a sectional view taken along the line VI—VI of Fig. 3;

Fig. 7 is a perspective view showing the sliding hood provided in the seatbelt anchor device described above; and

Fig. 8 is a sectional view showing the longitudinal, central section of an embodiment of the seatbelt anchor device according to the present invention.

Detailed description will hereunder be given of the present invention with reference to an embodiment thereof.

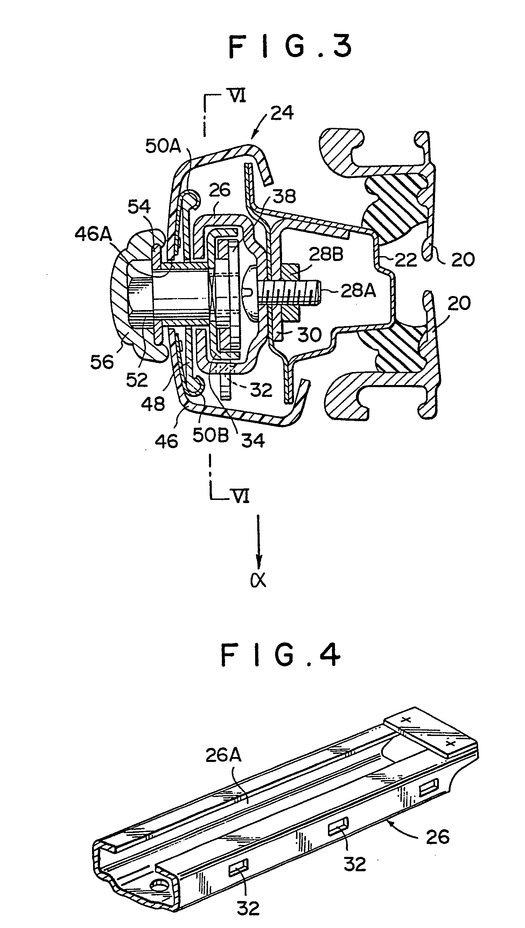

Fig. 3 is a sectional view showing an embodiment of a seatbelt anchor device according to the present invention. Disposed between door frames 20 is a center pillar 22, to the vehicle inboard side of which is secured a seatbelt anchor device 24. The seatbelt anchor device 24 is provided therein with a retainer 26, which is directly fixed to the center pillar 22 through a bolt 28A and a nut 28B. In this case, a reinforcement 30 constituting a reinforcing member is disposed in the center pillar 22, the center pillar 22 together with the reinforcement 30 are adapted to be tightened through the bolt 28A inserted from the side of the retainer 26 and the nut 28B threadably coupled onto the bolt 28A. As shown in Fig. 4, the retainer 26 is formed of a plate material being of substantially a C-shape in cross section. The longitudinal direction of the retainer 26 is positioned in register with the longitudinal direction of the center pillar 22, and the retainer 26 is solidly secured to the center pillar 22. An opening 26A of the retainer 26 provided along the longitudinal direction thereof is directed to the inboard side of the vehicle. Furthermore, formed at the side surface of the retainer 26, for example, in the forward direction of the vehicle (a direction indicated by arrow $\alpha$ in Fig. 3), are a plurality of holes 32 disposed at regular intervals along the longitudinal direction thereof.

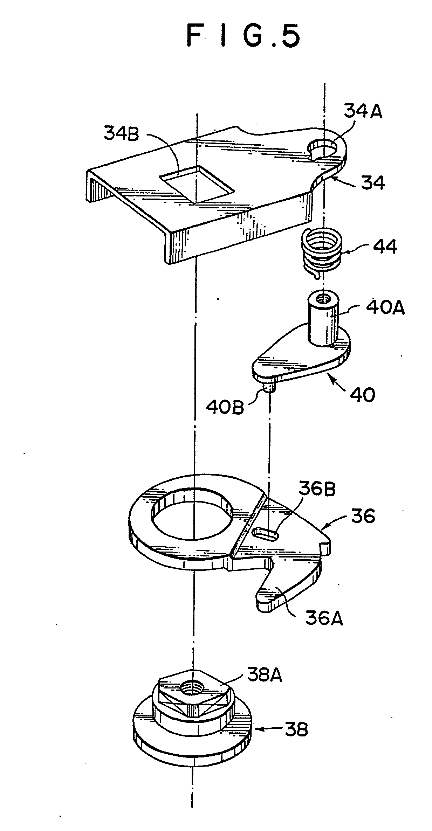

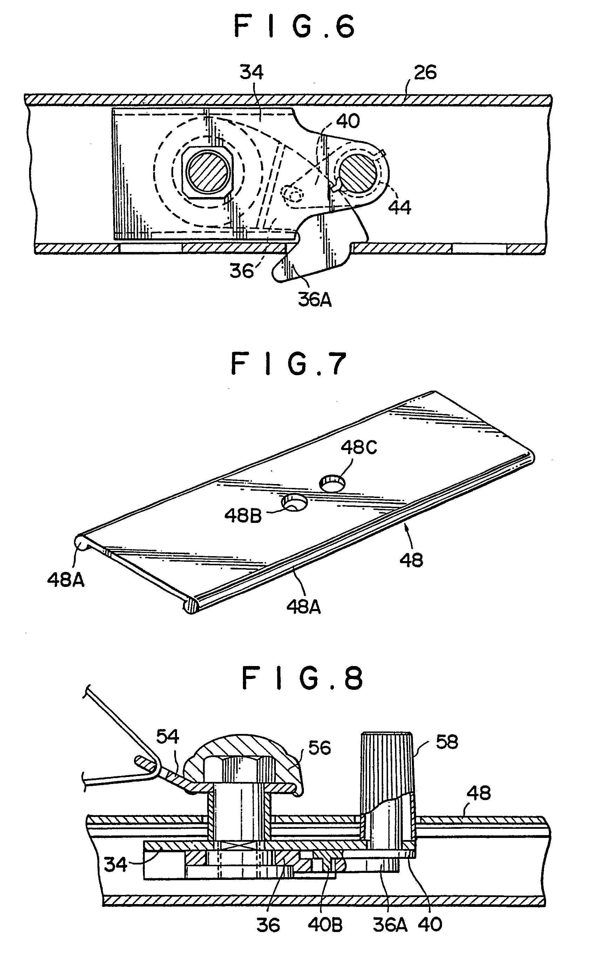

An anchor plate 34 longitudinally slidable in the retainer 26 is incorporated in the retainer 26, and, as shown in Fig. 5, this anchor plate 34 is formed of a plate material being of a C-shape in cross section, with an opening portion thereof formed in the longitudinal direction thereof being directed toward the outboard side of the vehicle. Disposed in the anchor plate 34 is a hook member 36, which is rotatably supported through an anchor pin 38. The hook member 36 is provided at the forward end portion thereof with a ratchet 36A directed in the rotational direction thereof, and this ratchet 36A projects from an end portion of the anchor plate 34 in the longitudinal direction thereof to engage with one of the plurality of holes 32 of the retainer 26. Interposed between the hook member 36 and the anchor plate 34 is a release lever 40, a shaft 40A of which extends through a hole 34A formed at one end of the anchor plate 34 in the longitudinal direction thereof to be jounalled. A torsion spring 44 is disposed around the shaft 40A of the release lever 40 and this torsion spring 44 is fixed at one end thereof to the release lever 40 and secured at the other end thereof to the anchor plate 34, whereby the aforesaid release lever 40 is constantly urged by the torsion spring 44 in the counterclockwise direction in Fig. 5 or 6. The forward end of the release lever 40 is provided at the side of the hook member 36 with a projection 40B, which is loosely coupled with a slot 36B formed at the forward end of the hook member 36, whereby the hook member 36 is constantly urged in the clockwise direction, so that the ratchet 36A thereof is engageable with one of the holes 32 of the retainer 26 as shown in Fig. 6 which is a sectional view taken along the line VI—VI in Fig. 3.

As shown in Fig. 3, a pillar garnish 46 is secured to the center pillar 22 in a manner to cover the retainer 26 as a whole, and this pillar garnish 46 is formed with an opening 46A for exposing the opening 26A of the retainer 26. Disposed between this pillar garnish 46 and the retainer 26 is a sliding hood 48. The sliding hood 48 has ridges 48A at opposite sides thereof in the longitudinal direction of the retainer 26 and the ridge 48A is substantially round in cross section and projects toward the retainer 26. This sliding hood 48 is supported by supporters 50A and 50B, which are formed of spring members fixed at positions close to the opening 46A in the pillar garnish 46, the spring members each having a circular arcuate shape extending in a manner to incorporate therein the ridges 48A of the sliding hood 48, whereby the sliding hood 48 is slidable in the longitudinal direction thereof in a manner to be supported by the supporters 50A and 50B.

As shown in Fig. 5, the anchor pin 38 pivotally supporting the hook member 36 on the anchor plate 34 has a shaft end portion 38A being of a rectangular shape. The shaft end portion 38A extends through a rectangular hole 34B formed in the anchor plate 34 to be prevented from rotating. As shown in Fig. 3, an anchor bolt 52 having its head over the pillar garnish 46 extends through a hole 48B formed in the sliding hood 48 and is threadably coupled into the axial end surface of the anchor pin 38. Engaged with the anchor bolt 52 at a portion close to the head of the anchor bolt 52 is a webbing support member 54 which is clinched to be fixed by a cap 56 secured to the head of the anchor bolt 52. The shaft 40A of the release lever 40 pivotally supported on the anchor plate 34 extends through a hole 48C formed in the sliding hood 48 and a finger grip 58 is attached onto the shaft 40A as shown in Fig. 8 in which the shaft 40A is sectioned at its center in the longitudinal direction thereof.

Description will hereunder be given of operation of this embodiment with the above-described arrangement.

When entering the vehicle, the occupant rotates the finger grip 58 of the seatbelt anchor device 24 provided on the center pillar 22 in the clockwise direction in Fig. 6. This rotation is effected against the urging force of the torsion spring 44 provided on the shaft 40A of the release lever 40, whereby the release lever 40 is also rotated in the same direction as above, so that the projection 40B provided at the forward end of the release lever 40 and loosely inserted into the slot 36B of the hook member 36 rotates the hook member 36 in the counterclockwise direction. As a result, the ratchet 36A of the hook member 36 is disengaged from the hole 32 formed in the retainer 26, so that the anchor plate 34 can slide along the retainer 26.

Thereafter, when the occupant slides the anchor plate 34 to a suitable position in accordance with his own physical build, and releases the finger grip 58, the release lever 40 is rotated by the urging force of the torsion spring 44 provided on the shaft 40A thereof in the counterclockwise direction in Fig. 6, whereby the projection 40B provided at the forward end thereof and loosely inserted into the slot 36B of the hook member 36 rotates the hook member 36 in the clockwise direction. As a result, the ratchet 36A of the hook member 36 engages with one of the holes 32 positioned at a suitable portion of the retainer 26, whereby the anchor plate 34 is fixed to the retainer 26.

If the vehicle is involved in an emergency such as a collision, a high tension is generated in the webbing, whereby a force of a high value acts on the webbing support member 54 at its inboard side of the vehicle. As a result, the anchor plate 34 fixing the webbing support member 54 receives a force for urging the anchor plate 34 to separate from the retainer 26. Since the retainer 26 is formed of a member being of substantially a C-shape in cross section and the portions adjacent the opening 26A formed in the retainer 26 in the longitudinal direction thereof interfere with the anchor plate 34, the anchor plate 34 is kept within the retainer 26. It is necessary to consider the maximum value of force applicable to the webbing support member 54 in determining the material quality, thickness, etc. of the retainer 26. Also, the retainer 26 is fixed to the center pillar 22 in such a manner that the center pillar 22 together with the reinforcement 30 constituting a reinforcing member provided in the center pillar 22 are tightened by the bolt 28A inserted from the side of the retainer 26 and the nut 28B threadably coupled onto the bolt 28A, whereby the center pillar 22 cannot be damaged into allowing the retainer 26 to be separated, and the occupant is reliably protected.

While, in this embodiment, description has been given of the shoulder anchor device secured to the center pillar, it must be understood that the foregoing description is intended to be illustrative only and not limitative of the present invention. Needless to say, the invention is applicable to other types of seatbelt anchor devices supporting the webbing and requiring adjustment of the movement of the webbing.

As has been described hereinabove, with the seatbelt device according to the present invention, the anchor supporting the webbing can be easily adjusted by the handling of the finger grip 58 of the like.

## Claims

1. A seatbelt anchor device (24) for holding a part of a seatbelt webbing (10) to adjustably position the webbing (10) over an occupant (18) in a vehicle (2), said seatbelt anchor device (24) comprising a retainer (26) fixed to a vehicle body and having a plurality of holes (32), an anchor plate (34) slidable along and retained in said retainer (26), a hook member (36) supported by said anchor plate (34) and engageable with one of said holes (32), a release means (40) provided on said anchor plate (34) for releasing said hook member (36) from said holes (32), and a webbing support member (54) secured to said anchor plate (34) and supporting the webbing (10), whereby the position of said webbing support member (54) may be adjusted to a suitable position for the occupant (18) which corresponds to one of said holes (32) engaged with said hook member (36), the hook member (36) being disengaged from a hole (32) prior to adjustment by operation of said release means (40), characterised in that said plurality of holes (32) are located in a side portion of said retainer (26), in that said hook member (36) is rotatably supported by said anchor plate (34) and in that said release means is a separate release lever (40), which is pivotally mounted on said anchor plate (34) and is coupled with said hook member (36).

2. A seatbelt anchor device according to Claim 1, characterised in that said seatbelt anchor device (24), further comprises a resilient means (44) for resiliently urging said hook member (36) to engage with one of said holes (32), via said release lever (40).

3. A seatbelt anchor device according to Claim 1 or Claim 2, characterised in that said release lever (40) is coupled with a finger grip (58) protruding towards the inside of the vehicle (2) whereby said finger grip (58) is operable by an occupant (18) to release said hook member (36) from one of said holes (32) via said release lever (40) and to slide said anchor plate (34) along said retainer (26).

4. A seatbelt anchor device according to any of Claims 1 to 3, characterised in that said retainer (26) is generally C-shaped in cross section, the opening (26A) of the C-shape of said retainer being directed towards the inside of the vehicle (2).

5. A seatbelt anchor device according to Claim 4, characterised in that said anchor plate (34) is generally C-shaped in cross section, the opening of the C-shape of said anchor plate being directed toward the outside of the vehicle (2).

6. A seatbelt anchor device according to any of Claims 1 to 5, characterised in that said webbing (10) is a shoulder webbing, and said retainer (26) is fixed to and extends along a center pillar (22) of the vehicle (2).

7. A seatbelt anchor device according to Claim 6, characterised in that said plurality of holes (32) are provided on said retainer (26) in a vertical direction.

8. A seatbelt anchor device according to Claim 6 or Claim 7, characterised in that said retainer (26) is fixed to said center pillar (22) together with a reinforcing member (30) for reinforcing the connection between said retainer and said center pillar.

9. A seatbelt anchor device (24) for holding a part of a seatbelt webbing (10) to adjustably position the webbing (10) over an occupant (18) in a vehicle (2), said seatbelt anchor device (24) comprising a retainer (26) fixed to a vehicle body and having a plurality of holes (32), an anchor plate (34) slidable along and retained in said retainer (26), a hook member (36) supported by said anchor plate (34) and engageable with one of said holes (32), a release means (40) provided on said anchor plate (34) for releasing said hook member (36) from said holes (32), biasing means (44) to urge said hook member (36) into engagement with any selected one of said holes (32), and a webbing support member (54) secured to said anchor plate (34) and supporting the webbing (10), whereby the position of said webbing support member (54) may be adjusted to a suitable position for the occupant (18) which corresponds to one of said holes (32) engaged with said hook member (36), the hook member (36) being disengaged from a hole (32) prior to adjustment by operation of said release means (40), characterised in that said plurality of holes (32) are located in a side portion of said retainer (26), in that said hook member (36) is movably supported by said anchor plate (34) and has a projection (36A) engageable in any selected one of said holes (32), in that said release means is a separate release lever (40), which is movably mounted on said anchor plate (34) and acts on said hook member (36) to move the hook member in response to movement of the release lever (40), and in that said biasing means (44) acts between said anchor plate (34) and said release lever (40) to bias the release lever, and in turn the hook member (36), in a direction to engage said projection (36A) of the hook member (36) in any one of said holes (32).

## Patentansprüche

1. Sicherheitsgurt-Verankerungsvorrichtung (24) zur Halterung eines Teils eines Sicherheitsgurtbandes (10) für eine einstellbare Positionierung des Gurtbandes (10) bezüglich eines Fahrgastes (18) in einem Kraftfahrzeug (2), wobei die Sicherheitsgurt-Verankerungsvorrichtung (24) ein Halteteil (26) umfaßt, das an einer Kraftfahrzeugkarosserie befestigt ist und mehrere Öffnungen (32) hat, sowie eine entlang des Halteteils (26) verschiebliche und in diesem gehaltene Verankerungsplatte (34), ein von der Verankerungsplatte (34) getragenes und mit einer der Öffnungen (32) in Eingriff bringbares Hakenelement (36), eine an der Verankerungsplatte (34) zum Lösen des Hakenelements (36) aus den Öffnungen (32) vorgesehene Löseeinrichtung (40), und ein an der Verankerungsplatte (34) befestigtes und das Gurtband (10) tragendes Gurtbandtrageelement (54), wodurch die Position des Gurtbandtrageelements (54), die derjenigen Öffnung (32), mit der das Hakenelement (36) in Eingriff steht, entspricht, für den Fahrgast (18) geeignet eingestellt werden kann, wobei das Hakenelement (36) vor der Einstellung durch die Betätigung der Löseeinrichtung (40) außer Eingriff von einer Öffnung (32) gebracht wird, dadurch gekennzeichnet, daß die Vielzahl von Öffnungen (32) in einem seitlichen Abschnitt des Halteteils (26) angeordnet sind, daß das Hakenelement (36) drehbar von der Verankerungsplatte (34) getragen ist, und daß die Löseeinrichtung ein getrennter Lösehebel (40) ist, der drehbar an der Verankerungsplatte (34) gelagert und mit dem Hakenelement (36) gekoppelt ist.

2. Sicherheitsgurt-Verankerungsvorrichtung nach Anspruch 1, dadurch gekennzeichnet, daß sie ferner ein Federelement (44) umfaßt, das das Hakenelement (36) über den Lösehebel (40) federnd in Eingriff mit einer der Öffnungen (32) drückt.

3. Sicherheitsgurt Verankerungsvorrichtung nach Anspruch 1 oder 2, dadurch gekennzeichnet, daß der Lösehebel (40) mit einem Fingergriff (58) verbunden ist, der in Richtung der Innenseite des Kraftfahrzeugs (2) vorsteht, wodurch der Fingergriff (58) von einem Fahrgast (18) betätigbar ist, um das Hakenelement (36) aus einer der Öffnungen (32) über den Lösehebel (40) zu lösen und die Verankerungsplatte (34) entlang des Halteteils (26) zu verschieben.

4. Sicherheitsgurt-Verankerungsvorrichtung nach einem der Ansprüche 1 bis 3, dadurch gekennzeichnet, daß das Halteteil (26) im allgemeinen im Querschnitt C-förmig ist, wobei die Öffnung (26A) der C-Form des Halteteils zur Innenseite des Fahrzeugs (2) gerichtet ist.

5. Sicherheitsgurt-Verankerungsvorrichtung nach Anspruch 4, dadurch gekennzeichnet, daß die Verankerungsplatte (34) im allgemeinen im Querschnitt C-förmig ist, wobei die Öffnung der C-Form der Verankerungsplatte zur Außenseite des Fahrzeugs (2) gerichtet ist.

6. Sicherheitsgurt-Verankerungsvorrichtung nach einem der Ansprüche 1 bis 5, dadurch gekennzeichnet, daß das Gurtband (10) ein Schultergurtband ist, und daß das Halteteil (26) an einem Mittelpfosten (22) des Fahrzeugs (2) befestigt ist und sich entlang diesem erstreckt.

7. Sicherheitsgurt-Verankerungsvorrichtung nach Anspruch 6, dadurch gekennzeichnet, daß die Vielzahl der Öffnungen (32) in dem Halteteil (26) in einer Vertikalrichtung verlaufen.

8. Sicherheitsgurt-Verankerungsvorrichtung nach Anspruch 6 oder 7, dadurch gekennzeichnet, daß das Halteteil (26) zusammen mit einem Verstärkungsteil (30), das zur Verstärkung der Verbindung zwischen dem Halteteil und dem Mittelpfosten dient, an dem Mittelpfosten (22) befestigt ist.

9. Sicherheitsgurt-Verankerungsvorrichtung (24) zur Halterung eines Teils eines Sicherheitsgurtbandes (10) für eine einstellbare Positionierung des Gurtbandes (10) bezüglich eines Fahrgastes (18) in einem Kraftfahrzeug (2), wobei die Sicherheitsgurt-Verankerungsvorrichtung (24) ein Halteteil (26) umfaßt, das an einer Kraftfahrzeugkarosserie befestigt ist und mehrere Öffnungen (32) hat, sowie eine entlang des Halteteils (26) verschiebliche und in diesem gehaltene Verankerungsplatte (34), ein von der Ankerplatte (34) getragenes und mit einer der Öffnungen (32) in Eingriff bringbares Hakenelement (36), eine an der Verankerungsplatte (34) zum Lösen des Hakenelements (36) aus den Öffnungen (32) vorgesehene Löseeinrichtung (40), eine Beaufschlagungseinrichtung (44), die das Hakenelement (36) in Eingriff mit einer ausgewählten Öffnung (32) drückt, und ein an der Verankerungsplatte (34) befestigtes und das Gurtband (10) tragendes Gurtbandtrageelement (54), wodurch die Position des Gurtbandtrageelements (54), die derjenigen Öffnung (32), mit der das Hakenelement (36) in Eingriff steht, entspricht, für den Fahrgast (18) geeignet eingestellt werden kann, wobei das Hakenelement (36) vor der Einstellung durch die Betätigung der Löseeinrichtung (40) außer Eingriff von einer Öffnung (32) gebracht wird, dadurch gekennzeichnet, daß die Vielzahl der Öffnungen (32) in einem seitlichen Abschnitt des Halteteils (26) angeordnet sind, daß das Hakenelement (36) von der Verankerungsplatte (34) beweglich getragen ist und einen Vorsprung (36A) hat, der mit irgendeiner ausgewählten Öffnung (32) in Eingriff bringbar ist, daß die Löseeinrichtung ein getrennter Lösehebel (40) ist, der beweglich an der Verankerungsplatte (34) angebracht ist und auf das Hakenelement (36) wirkt und dieses dadurch in Abhängigkeit der Bewegung des Lösehebels (40) bewegt, und daß die Beaufschlagungseinrichtung (44) zwischen der Verankerungsplatte (34) und dem Lösehebel (40) wirkt und dadurch den Lösehebel, und somit das Hakenelement (36) in eine Richtung beaufschlagt, die den Vorsprung (36A) des Hakenelements (36) in Eingriff mit irgendeiner der Öffnungen (32) bringt.

**Revendications**

1. Dispositif d'ancrage (24) pour ceinture de siège, appelé à maintenir une partie d'une sangle (10) de ceinture de siège de manière à positionner de façon ajustable la sangle (10) sur un occupant (18) d'un véhicule (2), ledit dispositif d'ancrage (24) de ceinture de siège comprenant un élément de retenue (26) fixé sur la carrosserie du véhicule et pourvu d'une pluralité de trous (32), une plaque d'ancrage (34) capable de coulisser le long dudit élément de retenue (26) et maintenue à l'intérieur de celui-ci, un élément d'accrochage (36) porté par ladite plaque d'ancrage (34) et susceptible de s'engager dans un desdits trous (32), des moyens de dégagement (40) disposés sur ladite. plaque d'ancrage (34) pour dégager ledit élément d'accrochage (36) desdits trous (32), ainsi qu'un élément de support (54) de la sangle fixé sur ladite plaque d'ancrage (34) et supportant ladite sangle (10), la position dudit élément de support (54) de la sangle (54) pouvant être ajustée de manière convenable à une position adéquate de l'occupant (18), cette position correspondant à un desdits trous (32) coopérant avec ledit élément d'accrochage (36), et cet élément d'accrochage (36) étant dégagé d'un trou (32) avant que l'ajustage soit effectué par l'actionnement desdits moyens de dégagement (40), caractérisé en ce que lesdits trous (32) sont disposés dans une partie latérale dudit élément de retenue (26), en ce que ledit élément d'accrochage (36) est monté à rotation sur ladite plaque d'ancrage (34), et en ce que lesdits moyens de dégagement sont constitués par un levier de dégagement (40) séparé monté à pivotement sur ladite plaque d'ancrage (34) et accouplé audit élément d'accrochage (36).

2. Dispositif d'ancrage pour ceinture de siège selon la revendication 1, caractérisé en ce qu'il comporte en outre des moyens élastiques (44) appelés à solliciter élastiquement ledit élément d'accrochage (36) vers son engagement dans un desdits trous (32), par l'intermédiaire dudit levier de dégagement (40).

3. Dispositif d'ancrage pour ceinture de siège selon la revendication 1 ou 2, caractérisé en ce ledit levier de dégagement (40) est accouplé à un téton d'actionnement manuel (58) faisant saillie vers l'intérieur du véhicule (2), ledit téton manuel (58) étant susceptible d'être actionné par un occupant (18) de manière à dégager ledit élément d'accrochage (36) d'un desdits trous (32) par l'intermédiaire dudit levier de dégagement (40), et de faire glisser ladite plaque d'ancrage (34) le long dudit élément de retenue (26).

4. Dispositif d'ancrage pour ceinture de siège selon une quelconque des revendications 1 à 3, caractérisé en ce que ledit élément de retenue (26) présente une configuration générale de section transversale en C, l'ouverture (26A) définie par cette forme en C dudit élément de retenue étant dirigée vers l'intérieur du véhicule (2).

5. Dispositif d'ancrage pour ceinture de siège selon la revendication 4, caractérisé en ce que ladite plaque d'ancrage (34) présente une configuration générale de section transversale en C, · l'ouverture de cette forme en C de ladite plaque d'ancrage étant dirigée vers l'extérieur du véhicule (2).

6. Dispositif d'ancrage pour ceinture de siège selon une quelconque des revendications 1 à 5, caractérisé en ce que ladite sangle (10) forme une bande d'épaule, ledit élément de retenue (26) étant fixé sur un montant central (22) du véhicule (2) et s'étendant le long de ce montant.

7. Dispositif d'ancrage pour ceinture de siège selon la revendication 6, caractérisé en ce que lesdits trous (32) sont ménagés dans ledit élément de retenue (26) en direction verticale.

8. Dispositif d'ancrage pour ceinture de siège selon la revendication 6 ou 7, caractérisé en ce que ledit élément de retenue (26) est fixé sur ledit montant central (22) en combinaison avec un élément de renforcement (30) appelé à renforcer la liaison entre ledit élément de retenue et ledit montant central.

9. Dispositif d'ancrage (24) pour ceinture de siège, appelé à maintenir une partie d'une sangle (10) de ceinture de siège et à positionner de manière réglable la sangle sur un occupant (18) dans un véhicule (2), ledit dispositif d'ancrage (24) comprenant un élément de retenue (26) fixé sur la carrosserie du véhicule et pourvu d'une pluralité de trous (32), une plaque d'ancrage (34) montée à coulissement le long dudit élément de retenue (26) et maintenue dans ce dernier, un élément d'accrochage (36) porté par ladite plaque d'ancrage (34) et susceptible de s'engager dans un desdits trous (32), des moyens de dégagement (40) disposés sur ladite plaque d'ancrage (34) pour dégager ledit élément d'accrochage (36) desdits trous (32), des moyens de sollicitation (44) sollicitant ledit élément d'accrochage (36) vers l'engagement de celui-ci dans un trou choisi parmi ladite pluralité de trous (32), ainsi qu'un élément de support (54) de la sangle fixé sur ladite plaque d'ancrage (34) et supportant la sangle (10), la position dudit élément de support (54) de la sangle étant réglable de manière convenable pour l'occupant (18), et correspondant à un desdits trous (32) dans lequel élément d'accrochage (36) est engagé, ce dernier étant dégagé d'un trou (32) avant que le réglage ne soit effectué par l'actionnement desdits moyens de dégagement (40), caractérisé en ce que lesdits trous (32) sont disposés dans une partie latérale dudit élément de retenue (26), en ce que ledit élément d'accrochage (36) est monté de manière mobile sur ladite plaque d'ancrage (34) et comporte une protubérance (36A) susceptible de s'engager dans un trou (32) quelconque choisi dans ladite pluralité de trous, en ce que lesdits moyens de dégagement sont constitués par un levier de dégagement (40) séparé qui est monté de manière mobile sur ladite plaque d'ancrage (34) et qui agit sur ledit élément d'accrochage (36) afin de le déplacer en réponse à un déplacement du levier de dégagement (40), et en ce que lesdits moyens de sollicitation (44) agissent entre ladite plaque d'ancrage (34) et ledit levier de dégagement (40) de manière à solliciter le levier de dégagement et, par suite, l'élément d'accrochage (36) dans une direction telle que ladite protubérance (36A) de l'élément d'accrochage (36) s'engage dans l'un quelconque desdits trous (32).

# F I G . 1

# F I G . 2

# F I G . 3

# F I G . 4

2

# F I G . 5

34B

34A

34

44

40A

40B

40

36B

36

36A

38A

38

# F I G . 6

# F I G . 7

# F I G . 8